# EUROPEAN PATENT SPECIFICATION

(11) **EP 2 534 827 B1**
(45) Date of publication and mention of the grant of the patent: **04.01.2017**
(21) Application number: 11742096.8
(22) Date of filing: 17.01.2011
(51) Int. Cl.: H04N 5/232, H04N 5/235, H04N 5/353

(54) **IMAGE CAPTURING APPARATUS AND METHOD FOR CONTROLLING THE SAME**
BILDAUFNAHMEVORRICHTUNG UND STEUERUNGSVERFAHREN DAFÜR
APPAREIL DE CAPTURE D'IMAGE ET PROCÉDÉ DE COMMANDE DE CE DERNIER

(30) Priority: 09.02.2010 JP 2010026199
(43) Date of publication of application: 19.12.2012
(73) Proprietor: Ricoh Company, Limited, Tokyo 143-8555 (JP)
(72) Inventor: SUITO, Hiroshi, Tokyo 143-8555 (JP)
(74) Representative: Leeming, John Gerard
(86) International application number: PCT/JP2011/051140
(87) International publication number: WO 2011/099347

(56) References cited:
- EP-A2- 1 677 514
- JP-A- 2000 165 739
- JP-A- 2004 135 158
- JP-B2- 4 310 755
- US-A1- 2003 128 279
- US-A1- 2004 252 224
- US-A1- 2005 200 744

## Description

### TECHNICAL FIELD

The present invention is directed generally to an image capturing apparatus provided with an image sensor and a method for controlling the image capturing apparatus.

### BACKGROUND ART

Digital cameras have come into widespread use as image capturing apparatus provided with an image sensor, such as a complementary mental-oxide semiconductor (CMOS) sensor or a charge coupled device (CCD) sensor. A digital camera is typically configured to display images formed on an image sensor as monitor moving images on an electronic viewfinder, to capture a still image when a shutter release button is pressed, and to store image data pertaining to the captured still image in a recording medium, such as a memory card. In such a digital camera, in response to pressing of the shutter release button, an operation mode of an image sensor is switched from an image monitoring mode for displaying moving images to a still-image photographing mode for capturing a still image to thereby activate the image sensor under a condition appropriate for still-image photographing.

The switching of the sensor operation mode from the image monitoring mode to the still-image photographing mode is performed with a central processing unit (CPU) of the digital camera by completing parameter settings to the timing generator for the still-image photographing mode.
In the still-image photographing mode, operation of the image sensor is controlled according to a timing signal fed from the timing generator so that exposure of pixels on the image sensor and reading of pixel signals from the image sensor are independently performed in different frame periods (i.e., time periods separated with vertical synchronizing signals). In the still-image photographing mode, a frame period, in which exposure of pixels on the image sensor is performed, is referred to as a still-image exposure period, while a frame period, in which pixel signals are read from the image sensor, is referred to as a still-image read period.

In the still-image photographing mode, a mechanical shutter is closed during the still-image read period to prevent the image sensor from being exposed to external light. In the still-image photographing mode, time setting for time, at which the mechanical shutter is to be closed, is also completed. The time setting for the time, at which the mechanical shutter is to be closed, is performed with the CPU by starting a timer adjusted for the time, at which the mechanical shutter is to be closed. A timing of closing the mechanical shutter conditions a still-image exposure period, as well as the settings of the electronic shutter that determines when to start exposure. Accordingly, the timer must be started in synchronization as much as possible with a vertical synchronizing signal serving as a reference for start of the still-image exposure period.

Meanwhile, with some types of general-purpose image sensor, as a condition for allowing the image sensor to be appropriately used as an imaging device of a digital camera, it is required to complete parameter settings to the timing generator for the still-image photographing mode within a limited period of time immediately after start of the still-image exposure period. In a situation where such an image sensor is used as an imaging device of a digital camera, it is also required to set time, at which the mechanical shutter is to be closed, immediately after the start of the still-image exposure period as discussed above. The parameter settings for the still-image photographing mode and time setting for the time, at which the mechanical shutter is to be closed, which are tasks to be performed with the CPU, coincide with each other. This makes it difficult to appropriately complete these two tasks in the limited period of time. A delay in time setting for the time, at which the mechanical shutter is to be closed, gives rise to a problem of being unable to controlling an exposure period of a still image, resulting in a failure in obtaining a still image of a desired brightness. A delay in completing the parameter settings for the still-image photographing mode gives rise to a problem of being unable to performing still-image photographing *per se.*

Examples of known techniques for reducing time lag that can develop during still-image photographing by smoothly switching the operation mode of an image sensor from the image monitoring mode to the still-image photographing mode include a technique disclosed in Japanese Patent No. 4310755. According to the technique disclosed in Japanese Patent No. 4310755, when a shutter release button is pressed halfway, an aperture, an electronic shutter speed, and exposure settings are determined based on brightness of a subject of a photo-to-be, and a diaphragm is controlled to close to the aperture. When the shutter release button is pressed to the rest of the way, parameters for activating the image sensor in the still-image photographing mode, an electronic shutter speed for still-image exposure, parameters related to time points for driving a mechanical shutter, and the like are applied to the timing generator. Thereafter, when an instruction for restart is fed to the timing generator, a vertical synchronizing signal for photographing falls immediately after restart, simultaneously the parameters for still-image photographing are made effective, and then photographing (exposure) of a still image is performed.

However, when the image sensor mentioned above, on which a constraint related to usage is imposed, is used as an imaging device of a digital camera, even when the technique disclosed in Japanese Patent No. 4310755 is employed, it is still required to complete processing of making parameters for the still-image photographing mode effective and starting a timer adjusted for time, at which the mechanical shutter is to be closed, within a short period of time immediately after start of a still-image exposure period. Hence, problems, such as defective exposure caused by a delay in time setting for the time, at which the mechanical shutter is to be closed, and failure to capture a still image resulting from a delay in the parameter settings for the still-image photographing mode, cannot be circumvented.

The present invention has been conceived in view of the above circumstances and aims at providing an image capturing apparatus capable of, even when an image sensor, on which a constraint related to usage is imposed, is employed, appropriately capturing a still image by appropriately completing of parameter settings for a still-image photographing mode and setting time, at which the mechanical shutter is to be closed, and providing a control method for controlling the image capturing apparatus.

US2004/0252224 A1 discloses the switch from an image monitoring mode to a still image mode by inserting a "processing event A" in preparation of the still image photographing mode, followed by loading an exposure time set-up after "processing event A" with the next vertical sync signal, while continuing with electronic shuttering during that period.

EP1677514 A2 discloses to continue with an electronic shutter operation during a time between pressing a release button in image monitoring mode and start of a still image exposure.

### DISCLOSURE OF INVENTION

The invention is set-out in the appended claims.

It is an object of the present invention to at least partially solve the problems in the conventional technology.

According to an aspect of the present invention, an image capturing apparatus includes: an image sensor that outputs analog pixel signals; an analog-image processing unit that receives the analog pixels signals and processes the analog pixel signals to output digital image data; a timing generator that generates a timing signal and provides the timing signal to the image sensor and to the analog-image processing unit; a mechanical shutter that is operable into an open state where the mechanical shutter exposes the image sensor to light and into a closed state where the mechanical shutter covers the image sensor from light; and a control unit that, when a instruction to capture a still image is input, performs completing of parameter settings to the timing generator and time setting for time, at which the mechanical shutter is to be closed, the parameter settings causing an operation mode of the image sensor to switch to a still-image photographing mode, wherein in response to the instruction to capture a still image, the control unit inserts a dummy still-image exposure period and a dummy still-image read period into a point in time before a still-image exposure period and a still-image read period, performs completing of the parameter settings to the timing generator during the dummy still-image exposure period, and when the still-image exposure period is started after an elapse of the dummy still-image read period, then performs the time setting for the time at which the mechanical shutter is to be closed.

According to another aspect of the present invention, a control method for an image capturing apparatus includes: an image sensor that outputs analog pixel signals; an analog-image processing unit that receives the analog pixel signals from the image sensor and processes the analog pixels signals to output digital image data; a timing generator that generates a timing signal and provides the timing signal to the image sensor and to the analog-image processing unit; and a mechanical shutter operable into an open state where the mechanical shutter exposes the image sensor to light and into a closed state where the mechanical shutter covers the image sensor from light, the control method comprising: inserting, in response to an instruction to capture a still image, a dummy still-image exposure period and a dummy still-image read period into a point in time before a still-image exposure period and a still-image read period; completing parameter settings to the timing generator during the dummy still-image exposure period, the parameter settings causing an operation mode of the image sensor to switch to a still-image photographing mode; and setting time at which the mechanical shutter is to be closed, when the still-image exposure period is started after an elapse of the dummy still-image read period.

### BRIEF DESCRIPTION OF DRAWINGS

Fig. 1A is a top view of a digital camera.
Fig. 1B is a front view of the digital camera.
Fig. 1C is a rear view of the digital camera.
Fig. 2 is a block diagram illustrating a control system of the digital camera.
Fig. 3A is a diagram illustrating a specific example (of a comparative example) of a photographing control sequence to be performed with a CPU.
Fig. 3B is a diagram illustrating a specific example (of the embodiment) of a photographing control sequence to be performed with a CPU.

### BEST MODES FOR CARRYING OUT THE INVENTION

Exemplary embodiments of the present invention will be described with reference to the drawings.

An example where the present invention is embodied in a digital camera using a CMOS sensor as an image sensor is described below, while the present invention is effectively applicable to a digital camera using a CCD sensor as well. The present invention is not limited to digital cameras, while widely applicable to image capturing apparatuses that can have conflict between processing for completing of parameter settings for still-image photographing and control processing for controlling a mechanical shutter.

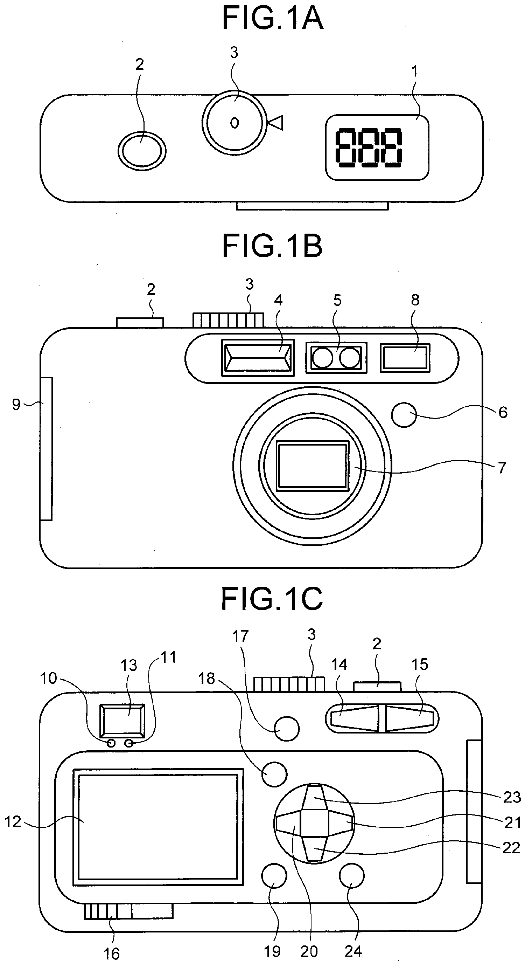

Figs. 1A to 1C are external views of a digital camera according to an embodiment of the invention. Fig. 1A is a top view of the digital camera. Fig. 1B is a front view of the digital camera. Fig. 1C is a rear view of the digital camera.

As illustrated in Fig. 1A, the digital camera according to the embodiment includes, on its top surface, a sub liquid crystal display (LCD) 1 displaying a count of still images that can be taken and the like, a shutter release button 2 to be pressed at still-image photographing, and a mode dial 3 to be operated for switching among various modes including a storing (photographing) mode for storing images, a playback mode for viewing stored images, and a setup mode for performing camera settings.

As illustrated in Fig. 1B, the digital camera according to the embodiment includes, on its front surface, a flashing unit 4 that activates flash, a rangefinder unit 5 that measures a distance to a subject of a photo-to-be, a remote-control light-receiving unit 6 that receives infrared signals from a remote control terminal (not shown), a lens barrel unit 7 including a zoom lens 25 and a focusing lens 26, a mechanical shutter 27, and a support member that supports these elements together, which will be described later, and an optical viewfinder (front surface) 8. The digital camera according to the embodiment includes, in its side surface, a memory card slot, into which a memory card 80, which will be described later, is to be inserted, and a battery receptacle for accommodating a battery. The memory card slot and the battery receptacle are closed with a lid 9.

The digital camera according to the embodiment includes, on its back surface, an autofocus light-emitting diode (AFLED) 10 emitting light when an autofocus function is on, a flash LED 11 emitting light for flashing, an LCD monitor 12 displaying various setting screens and playback images and serving as an electronic viewfinder at photographing, an optical viewfinder (back surface) 13, a zoom button (WIDE) 14 to be pressed when using wide-angle zooming, a zoom button (TELE) 15 to be pressed when using telephoto zooming, a power switch 16, and a self-timer/delete switch 17 to be pressed when using a self timer.

The digital camera according to the embodiment further includes, on its back surface, a menu switch 18 to be pressed to make a selection from a menu, an OK switch 19 to be pressed to confirm a selected item, an image viewing switch (left) 20 and an image viewing switch (right) 21 to be pressed to switch a played-back image displayed on the LCD monitor 12, a macro switch 22 to be pressed when performing macro photographing, a flash switch 23 to be pressed to switch a flash mode, and a display switch 24 to be pressed to switch a screen displayed on the LCD monitor 12.

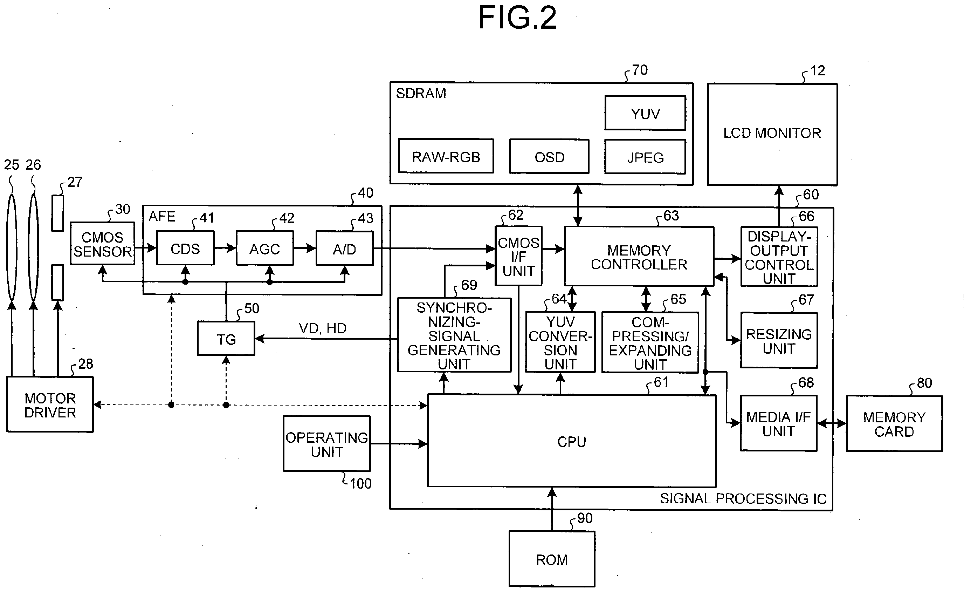

Fig. 2 is a block diagram illustrating a control system of the digital camera according to the embodiment. The digital camera according to the embodiment includes, as the configuration of the control system, a motor driver 28 that drives the zoom lens 25, the focusing lens 26, and the mechanical shutter 27, a CMOS sensor 30 being an image sensor, an analog front end (AFE) 40 that processes analog image signals fed from the CMOS sensor 30 to generate digital image data, a timing generator (TG) 50 that outputs a timing signal to the CMOS sensor 30 and the AFE 40, and a signal processing integrated circuit (IC) 60 that performs various digital image processing on the digital image data fed from the AFE 40 and controls operations of the overall digital camera. Not only the LCD monitor 12 mentioned above, but also a synchronous dynamic random-access memory (SDRAM) 70, the memory card 80, a read only memory (ROM) 90, an operating unit 100, and the like are connected to the signal processing IC 60.

The mechanical shutter 27 is a mechanical shutter operable into an open state where the mechanical shutter 27 exposes the CMOS sensor 30 to light and into a closed state where the mechanical shutter 27 shuts light traveling to the CMOS sensor 30. This mechanical shutter 27 is driven by the motor driver 28 that also drives the zoom lens 25 and the focusing lens 26 being optical lenses. Operation of the motor driver 28 driving the zoom lens 25, the focusing lens 26, and the mechanical shutter 27 is controlled with a CPU 61 provided in the signal processing IC 60.

The CMOS sensor 30 is a charge-coupled device that converts an optical image formed with an optical lens into electric signals proportional to brightness of the optical image based on photoelectric conversion function. The CMOS sensor 30 is activated according to the timing signal fed from the TG 50, by which exposure of pixels and signal reading are controlled. An electric output signal fed from the CMOS sensor 30 is fed to the AFE 40.

The AFE 40 includes a correlated double sampling (CDS) 41 that holds signals sampled from electric output signals (analog pixel signals) fed from the CMOS sensor 30, an auto gain control (AGC) 42 that adjusts gain of the signals sampled by the CDS 41, and an analog/digital (A/D) converter (A/D) 43 that converts output signals of the AGC 42 into digital signals. These elements of the AFE 40 are activated in synchronization with the CMOS sensor 30 according to the timing signal fed from the TG 50. Gain setting of the AGC 42 and the like are performed according to an instruction fed from a CPU 61 in the signal processing IC 60. The digital data (digital image data) output from the AFE 40 is fed to the signal processing IC 60.

A vertical synchronizing signal VD and a horizontal synchronizing signal HD generated by a synchronizing-signal generating unit 69 in the signal processing IC 60 are fed to the TG 50. The TG 50 generates a timing signal for use in activating the CMOS sensor 30 and the AFE 40 in synchronization with each other based on the vertical synchronizing signal VD and the horizontal synchronizing signal HD, and provides the thus-generated timing signal to the CMOS sensor 30 and the AFE 40.

The signal processing IC 60 includes the CPU 61 that performs centralized control of the overall digital camera, a CMOS interface (I/F) unit 62 that obtains digital image data from the AFE 40 according to the vertical synchronizing signal VD and the horizontal synchronizing signal HD, a memory controller 63 that controls writing and reading of data to and from the SDRAM 70, a YCbCr (YUV) conversion unit 64 that converts the digital image data fed from the CMOS I/F unit 62 into a YUV data form that allows the image data to be displayed and stored, a compressing/expanding unit 65 that compresses and expands the image data in a predetermined format (e.g., JPEG), a display-output control unit 66 that controls output of data to be displayed on the LCD monitor 12 or an external display device, a resizing unit 67 that changes image size depending on displaying size and a storing size, a media I/F unit 68 that controls writing and reading of data to and from the memory card 80, and the synchronizing-signal generating unit 69 that generates a vertical synchronizing signal VD and a horizontal synchronizing signal HD according to an instruction fed from the CPU 61.

The digital image data output from the AFE 40 is fed through the CMOS I/F unit 62 to the signal processing IC 60 where the digital image data is subjected to image processing, such as black level correction, correction of dropout pixels, and shading correction, and is thereafter temporarily stored in the SDRAM 70 as red-green-blue (RGB) data (RAW-RGB) by the memory controller 63.

The RAW-RGB image data stored in the SDRAM 70 is read by the memory controller 63 from the SDRAM 70, and is subjected to gain multiplying of white balance (WB), gamma correction, and RGB interpolation, and is thereafter fed to the YUV conversion unit 64. The YUV conversion unit 64 performs various image processing, such as edge enhancement and color settings, on the image data, and coverts the image data into YUV image data being luminance/color-difference signals. The YUV image data generated by the YUV conversion unit 64 is stored in the SDRAM 70 again by the memory controller 63.

The YUV image data stored in the SDRAM 70 is read by the memory controller 63 from the SDRAM 70 and is fed to the display-output control unit 66, together with on-screen display (OSD) data for displaying an icon indicating a photographing mode. The display-output control unit 66 combines the YUV image data and the OSD data to generate data to be displayed and outputs the data to be displayed with added signals, such as a synchronizing signal, to the LCD monitor 12. The display-output control unit 66 is capable of outputting the thus-generated data to be displayed as television (TV) video signals, and causing the data to be displayed on the external display device. For instance, if the external display device is a TV of a national television system committee system (NTSC) system, the resizing unit 67 performs horizontal/vertical scaling to adapt the data to the system.

Storing in the memory card 80 is performed in a following manner: the YUV image data stored in the SDRAM 70 is read by the memory controller 63 from the SDRAM 70 according to an instruction fed from the CPU 61; and is fed to the compressing/expanding unit 65, which in turn generates compressed data, such as JPEG data. Meanwhile, the YUV image data stored in the SDRAM 70 is full-size data. When an image size for storage in the memory card 80 is smaller than an image size of the CMOS sensor 30, the YUV image data is subjected to scale down process for storage, which is performed by the resizing unit 67, and is thereafter fed to the compressing/expanding unit 65. The compressed data (JPEG data) generated by the compressing/expanding unit 65 is stored in the SDRAM 70 again by the memory controller 63, and is thereafter subjected to processing, such as addition of a header, and is stored in the memory card 80 through the media I/F unit 68.

The operations of the units in the signal processing IC 60 discussed above are performed according to instructions fed from the CPU 61. The CPU 61 loads program codes and control data stored in the ROM 90 onto the SDRAM 70, for use in controlling the digital camera, and performs centralized control of operations of the overall digital camera based on the program codes. More specifically, the CPU 61 controls the motor driver 28, the AFE 40, the TG 50, and the processing units in the signal processing IC 60 according to an instruction entered with the various buttons and keys of the operating unit 100 or an operating instruction or the like fed from the remote control terminal (not shown) so that an image is appropriately captured, displayed, and stored according to the instruction. The operating unit 100 allows a photographer to provide operating instructions to the digital camera and includes various buttons and keys, such as the shutter release button 2 and the zoom buttons 14 and 15 illustrated in Fig. 1A to Fig. 1C.

A photographing control sequence to be performed with the CPU 61 when capturing a still image in response to pressing of the shutter release button 2 is described in more detail below.

When the power switch 16 is switched on in a state where the photographing mode is selected with the mode dial 3, the digital camera according to the embodiment is activated with the operation mode of the CMOS sensor 30 being set to the image monitoring mode. In the state where the operation mode of the CMOS sensor 30 is the image monitoring mode, pixel exposure and pixel-signal reading are repeatedly performed on a per horizontal line of the CMOS sensor 30 basis, and optical images formed on the CMOS sensor 30 are displayed as monitor moving images on the LCD monitor 12. In this image monitoring mode, time to start exposure of each horizontal line is controlled in accordance with time delay in pixel-signal reading from the horizontal line of the CMOS sensor 30. This manner equalizes each exposure period of individual horizontal lines, reducing vertical variations in brightness of an image (rolling shutter control). The pixel signals are decimated to, for instance, approximately one-third when being read, because output images are used for monitoring and are therefore not required to be high-definition images. A photographer checks a condition of a subject of a photo-to-be or the like by viewing monitor moving images displayed on the LCD monitor 12 in this image monitoring mode, and adjusts composition, and further presses the shutter release button 2 at a desired time.

When the shutter release button 2 is pressed, the operation mode of the CMOS sensor 30 is switched from the image monitoring mode to the still-image photographing mode; the CMOS sensor 30 is operated in the still-image photographing mode; a still image is captured; and image data pertaining to the thus-captured still image is stored in the memory card 80 or the like. The still-image photographing mode is configured to have a frame period (still-image exposure period) for exposure of pixels on the CMOS sensor 30 and a frame period (still-image read time) for reading pixel signals from the CMOS sensor 30. In this mode, operation of the CMOS sensor 30 is controlled according to a timing signal fed from the TG 50 so that the exposure of pixels on the CMOS sensor 30 and the pixel-signal reading from the CMOS sensor 30 are independently performed in the still-image exposure period and in the still-image read time, respectively. Meanwhile, pixel signals of all the pixels on the CMOS sensor 30 are read because a high-definition image is desirably obtained in the still-image photographing mode. The frame periods are periods of time separated with the vertical synchronizing signals VD generated by the synchronizing-signal generating unit 69.

In the still-image photographing mode, the mechanical shutter 27 is closed during the still-image read period to shut off external light traveling to the CMOS sensor 30. Hence, the exposure of pixels on the CMOS sensor 30 is brought to an end when the mechanical shutter 27 is closed. Meanwhile, an electronic shutter controls as to when to start exposure of each pixel so that exposure of all the pixels is started and completed in a batch (batch shutter control).

The switching of the sensor operation mode from the image monitoring mode to the still-image photographing mode is performed with the CPU 61 by completing parameter settings that cause the CMOS sensor 30 to operate in the still-image photographing mode to the TG 50. There are some cases where the CMOS sensor 30 is subject to a constraint of usage on time, at which the CPU 61 completes the parameter settings to the TG 50 for the still-image photographing mode. In this embodiment, the CMOS sensor 30 is under a constraint that the parameter settings are to be completed within several tens of microseconds from a vertical synchronizing signal VD that determines start of the still-image exposure period. The time setting for the time, at which the mechanical shutter 27 is to be closed, is performed with the CPU 61 by starting a timer adjusted for the time, at which the mechanical shutter 27 is to be closed. However, the time, at which the mechanical shutter 27 is to be closed, determines the still-image exposure period as discussed above. Accordingly, the timer must be started in synchronization as much as possible with the vertical synchronizing signal VD that determines the start of the still-image exposure period.

As discussed above, there can be a case where when an attempt of operating the CMOS sensor 30 in the still-image photographing mode is made in response to pressing of the shutter release button 2, processing for completing the parameter settings to the TG 50 for the still-image photographing mode and starting the timer for use in controlling the mechanical shutter 27 coincide with each other in a considerably short period of time immediately after a still-image exposure period has started. This makes it difficult for the CPU 61 to appropriately complete the two tasks. A delay in starting the timer controlling the mechanical shutter 27 results in a failure in obtaining a still image of a desired brightness because exposure period deviates from an intended value. A delay in completing the parameter settings for the still-image photographing mode gives rise to a critical problem of being unable to performing still-image photographing *per se.*

To this end, the digital camera according to the embodiment is configured such that, when the operation mode of the CMOS sensor 30 is switched from the image monitoring mode to the still-image photographing mode in response to pressing of the shutter release button 2, the CPU 61 inserts a dummy still-image exposure period and a dummy still-image read period into a point in time before the still-image exposure period where exposure of a still image is actually performed and the still-image read period where pixel signals are actually read out. The dummy still-image exposure period and the dummy still-image read period are unrelated to a still image to be stored. The CPU 61 operates to complete the parameter settings to the TG 50 for the still-image photographing mode during the dummy still-image exposure period and perform the processing for starting the timer for use in controlling the mechanical shutter 27 when the still-image exposure period is started after the dummy still-image read period has elapsed. This manner distributes the timing, at which the parameter settings for the still-image photographing mode are completed, and the processing for starting the timer for use in controlling the mechanical shutter 27 so that these tasks are performed at different time points appropriately and sequentially. This manner allows a still image to be captured appropriately irrespective of a usage constraint imposed on the CMOS sensor 30.

The CPU 61 operates to cause, when the parameter settings to the TG 50 for the still-image photographing mode have been completed, the synchronizing-signal generating unit 69 to generate the vertical synchronizing signal VD to thereby terminate the dummy still-image exposure period. The CPU 61 operates to complete exposure settings (including settings of the electronic shutter, settings of the AGC, and settings of an aperture) during the dummy still-image read period and to cause, when the exposure settings have been completed, the synchronizing-signal generating unit 69 to generate the vertical synchronizing signal VD to thereby terminate the dummy still-image read period. This manner allows an increase in release time lag caused by insertion of the dummy still-image exposure period and the dummy still-image read period to be minimized.

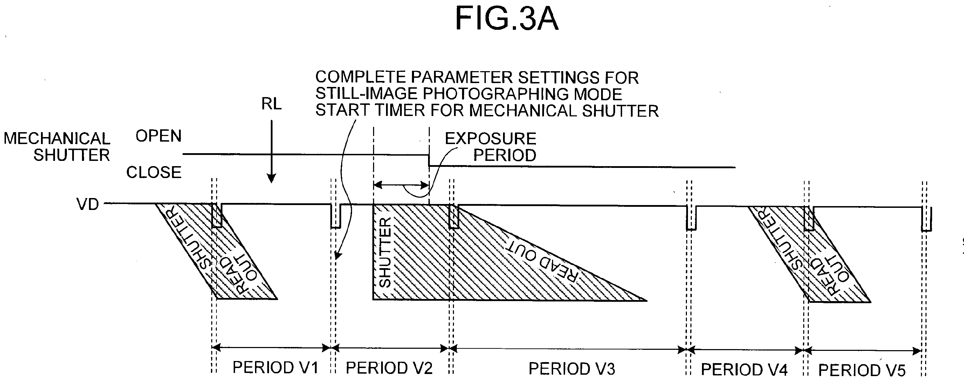

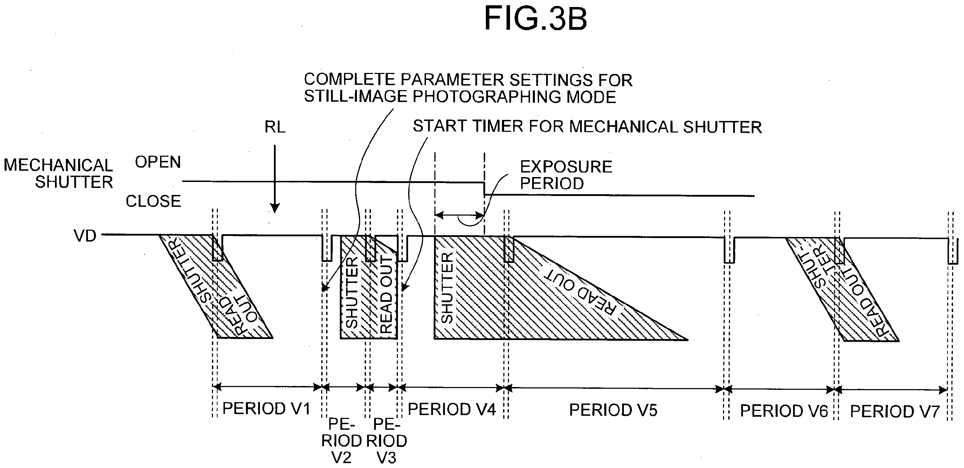

A specific example of a photographing control sequence (of the embodiment) to be performed with the CPU 61 of the digital camera according to the embodiment of the present invention is described below by way of comparison with a photographing control sequence (of the comparative example) of a configuration, to which the present invention is not applied, with reference to Fig. 3A and Fig. 3B. Fig. 3A is a diagram illustrating an example of the photographing control sequence of the comparative example. Fig. 3B is a diagram illustrating an example of the photographing control sequence of the embodiment of the present invention. The "RL" in Fig. 3A and Fig. 3B each indicates a time point at which the shutter release button 2 has been pressed. A frame period where the shutter release button 2 is pressed is referred to as a period V1, a frame period that is started with the first vertical synchronizing signal VD following the pressing of the shutter release button 2 is referred to as a period V2, and frame periods that is started with subsequent vertical synchronizing signals VD are referred to as a period V3, a period V4, a period V5, ....

Until the shutter release button 2 is pressed, control processing common to the comparative example and the embodiment of the present invention is performed such that the CMOS sensor 30 is operated in the image monitoring mode, and pixel exposure and pixel-signal reading are repeatedly performed on a per horizontal line of the CMOS sensor 30 basis by the rolling shutter control. In a situation where the shutter release button 2 has a two-position switch of a halfway-pressed position and a full-pressed position, autofocus (AF) processing is performed when the shutter release button 2 is pressed halfway with the CMOS sensor 30 operated in the image monitoring mode. As the AF processing, for instance, hill-climbing AF of finding a maximum contrast value by moving the focusing lens 26 is performed.

Thereafter, in the comparative example, when the shutter release button 2 is pressed to the rest of the way (full pressed), exposure settings for a still image to be captured (including settings of the electronic shutter, settings of the AGC, and settings of an aperture) are completed during the period V1 following the pressing of the shutter release button 2. The settings of the electronic shutter are completed by the TG 50 according to an instruction fed from the CPU 61. The settings of the AGC are performed by the AFE 40 according to an instruction fed from the CPU 61. When the first vertical synchronizing signal VD following the pressing of the shutter release button 2 rises to start the period V2, as illustrated in Fig. 3A, the CPU 61 performs control processing of switching the operation mode of the CMOS sensor 30 from the image monitoring mode to the still-image photographing mode. This processing is desirably performed within several tens of microseconds from the vertical synchronizing signal VD that determines the start of the period V2 (the still-image exposure period). Hence, program codes of firmware cause the vertical synchronizing signal VD to trigger an interrupt and cause the CPU 61 to complete the parameter settings to the TG 50 for the still-image photographing mode in the interrupt. When the parameters for the still-image photographing mode are loaded into the TG 50, the operation mode of the CMOS sensor 30 is switched, after a predetermined period of time, to the still-image photographing mode where exposure in the still-image exposure period (the period V2) and pixel-signal reading in the still-image read period (the period V3) are performed. When the still-image read period (the period V3) has elapsed, the operation mode of the CMOS sensor 30 is switched from the still-image photographing mode to the image monitoring mode where exposure and reading (the period V4 and the period V5) in the image monitoring mode are performed.

As illustrated in Fig. 3A, in the comparative example, control processing for closing the mechanical shutter 27 is performed in synchronization with the switching of the operation mode of the CMOS sensor 30 from the image monitoring mode to the still-image photographing mode. The control processing for closing the mechanical shutter 27 is performed with the CPU 61 by causing the timer (not shown) in the signal processing IC 60 to start. More specifically, the CPU 61 performs the control processing by causing the vertical synchronizing signal VD, based on which the start of the period V2 (still-image exposure period) is determined, to trigger start of the timer and causing the mechanical shutter 27 to be closed after a elapse of a predetermined period of time, thereby providing the exposure period. However, the CPU 61 is required to complete the parameter settings to the TG 50 for the still-image photographing mode at the start of the period V2 as discussed above. Accordingly, the control processing for closing the mechanical shutter 27 and the processing for completing the parameter settings for the still-image photographing mode, which are performed with the CPU 61, disadvantageously coincide with each other. This can result in such a problem that a still image of a desired brightness cannot be obtained because of a delay in the control processing for closing the mechanical shutter 27 and a problem of being unable to capturing a still image *per se* because of a delay in the parameter settings for the still-image photographing mode.

In contrast, in the embodiment of the present invention, after the shutter release button 2 is pressed, the dummy still-image exposure period (the period V2) and the dummy still-image read period (the period V3) are inserted into a point in time before the still-image exposure period (the period V4) where exposure of a still image is actually performed and the still-image read period (the period V5) where pixel signals are actually read out as illustrated in Fig. 3B. The dummy still-image exposure period (the period V2) and the dummy still-image read period (the period V3) are unrelated to a still image to be stored. The control processing (completing the parameter settings for the still-image photographing mode) for switching the operation mode of the CMOS sensor 30 from the image monitoring mode to the still-image photographing mode is performed immediately after the dummy still-image exposure period (the period V2) has started. The control processing (starting the timer adjusted for the time, at which the mechanical shutter 27 is to be closed) for closing the mechanical shutter 27 is performed immediately after the still-image exposure period (the period V4) is started after the dummy still-image read period (the period V3) has elapsed.

More specifically, in the embodiment, when the first vertical synchronizing signal VD following the pressing (full pressing) of the shutter release button 2 rises to start the period V2 (the dummy still-image exposure period), the CPU 61 completes the parameter settings to the TG 50 for the still-image photographing mode immediately after the period V2 (the dummy still-image exposure period) has started. When the parameter settings to the TG 50 for the still-image photographing mode have been completed, the operation mode of the CMOS sensor 30 is switched from the image monitoring mode to the still-image photographing mode. Accordingly, thereafter the CMOS sensor 30 repeatedly performs pixel exposure and pixel-signal reading on a per frame period basis. When the parameter settings to the TG 50 for the still-image photographing mode have been completed, the CPU 61 instructs the synchronizing-signal generating unit 69 to output a vertical synchronizing signal VD, thereby causing the synchronizing-signal generating unit 69 to output a subsequent vertical synchronizing signal VD.

When the subsequent vertical synchronizing signal VD has risen to start the period V3 (the dummy still-image read period), the CPU 61 performs exposure settings (including settings of the electronic shutter, settings of the AGC, and settings of an aperture) for a still image to be captured during the dummy still-image read period. At this time, the CMOS sensor 30 is in a state of performing pixel-signal reading. However, the pixel signals read out at this stage are discarded without undergoing processing performed in the signal processing IC 60. More specifically, the CPU 61 suspends processing performed on pixel signals in the signal processing IC 60 and discards pixel signals read from the CMOS sensor 30 during the dummy still-image read period without performing still-image storing processing because the CPU 61 recognizes that the period V3 is the dummy still-image read period. When the exposure settings for exposure of a still image to be captured have been completed, the CPU 61 instructs the synchronizing-signal generating unit 69 to output a vertical synchronizing signal VD, thereby causing the synchronizing-signal generating unit 69 to output a subsequent vertical synchronizing signal VD.

When the subsequent vertical synchronizing signal VD has risen to start the period V4 (the still-image exposure period), the CPU 61 performs control processing (starting the timer adjusted for the time, at which the mechanical shutter 27 is to be closed) for closing the mechanical shutter 27 immediately after the period V4 (the still-image exposure period) has started. Subsequent processing is performed as similar with the comparative example in a manner as follows: when the exposure of the still image to be captured is completed and the subsequent vertical synchronizing signal VD has risen to start the period V5 (the still-image read period), pixel-signal reading is performed; when the still-image read time (the period V5) has elapsed, the operation mode of the CMOS sensor 30 is switched from the still-image photographing mode to the image monitoring mode where exposure and reading (the period V6 and the period V7) are performed in the image monitoring mode.

As discussed above in detail by way of specific examples, the digital camera according to the embodiment of the present invention is configured such that after the shutter release button 2 is pressed, the CPU 61 operates to insert the dummy still-image exposure period and the dummy still-image read period unrelated to a still image to be stored into a point in time before the actual still-image exposure period and the actual still-image read period. The parameter settings to the TG 50 for the still-image photographing mode are completed during the dummy still-image exposure period while the control processing for closing the mechanical shutter 27 is performed when the still-image exposure period is started after the dummy still-image exposure period has elapsed. This manner allows the timing, at which the parameter settings for the still-image photographing mode are completed, and the timing of starting the timer for use in controlling the mechanical shutter 27, to be distributed temporally, thereby performing these tasks at different time points appropriately and sequentially. This manner allows a still image to be captured appropriately irrespective of usage constraint imposed on the CMOS sensor 30.

Insertion of the dummy still-image exposure period and the dummy still-image read period into the point in time before the actual still-image exposure period and the actual still-image read period can lead to an increase in release time lag. However, in the digital camera according to the embodiment of the present invention, the CPU 61 operates to terminate the dummy still-image exposure period when the parameter settings for the still-image photographing mode have been completed, and to terminate the dummy still-image read period when exposure settings have been completed. This manner allows the increase in release time lag resulting from insertion of the dummy still-image exposure period and the dummy still-image read period to be minimized.

Specific numerical values are given for illustrative purposes below, while these values can vary depending on specification of the CMOS sensor 30 and photographing condition. An actual value of the still-image exposure period is approximately 33.3 milliseconds, an actual value of the still-image read period is approximately 83 milliseconds, and it takes approximately 100 milliseconds to obtain one frame of a still image. If insertion of the dummy still-image exposure period and the dummy still-image read period increases required time by as much as 100 milliseconds, release time lag might pose a problem. However, by terminating the dummy still-image exposure period immediately after completion of the parameter settings for the still-image photographing mode and terminating the dummy still-image read period immediately after completion of the exposure settings, it is allowed to reduce required time inclusive of the dummy still-image exposure period and the dummy still-image read period to approximately two to four milliseconds, which is of a level unnoticeable as time lag. Meanwhile, terminating the dummy still-image exposure period and the dummy still-image read period with short duration arises no problem because pixel signals obtained by exposure in the dummy still-image exposure period and reading in the dummy still-image read period are discarded without being used in a still image.

Note that the invention is not limited to the embodiments discussed above, and can be modified in various manners without departing from the scope of the appended claims.
For instance, in the embodiment discussed above, it is assumed that the still-image exposure period and the still-image read period for one sill image are sequentially set on a per frame period basis, while the still-image exposure period and the still-image read period for one sill image can be set on a per multiple frame periods basis.

## Claims

1. An image capturing apparatus comprising:
an image sensor (30) that outputs analog pixel signals;
an analog-image processing unit (40) that receives the analog pixels signals and processes the analog pixel signals to output digital image data;
a synchronising-signal generating unit (69) that generates vertical synchronising signals and horizontal synchronising signals;
a timing generator (50) that generates a timing signal and provides the timing signal to the image sensor (30) and to the analog-image processing unit (40) based on the vertical synchronising signal and the horizontal synchronising signal;
a mechanical shutter (27) that is operable into an open state where the mechanical shutter (27) exposes the image sensor (30) to light and into a closed state where the mechanical shutter (27) covers the image sensor (30) from light; and
a control unit (61) that, when a instruction to capture a still image is input, performs completing of parameter settings to the timing generator (50) and time setting for time, at which the mechanical shutter (27) is to be closed, the parameter settings causing an operation mode of the image sensor (30) to switch from an image monitoring mode to a still-image photographing mode, **characterized in that**:
in response to the instruction to capture a still image, the control unit (61) inserts a dummy still-image exposure frame-period and a dummy still-image read frame-period into a point in time before a still-image exposure frame-period and a still-image read frame-period, performs completing of the parameter settings to the timing generator (50) during the dummy still-image exposure frame-period, and then performs the time setting for the time at which the mechanical shutter (27) is to be closed when the still-image exposure frame-period is started after an elapse of the dummy still-image read frame-period, wherein each frame-period is started with a vertical synchronising signal.

2. The image capturing apparatus of claim 1, wherein the control unit (61) terminates the dummy still-image exposure frame-period when the parameter settings to the timing generator (50) is completed by causing the synchronising-signal generating unit (69) to generate a vertical synchronising signal.

3. The image capturing apparatus of claim 1 or 2, wherein the control unit (61) completes exposure settings during the dummy still-image read frame-period and terminates the dummy still-image read frame-period when the exposure settings are completed by causing the synchronising-signal generating unit (69) to generate a vertical synchronising signal.

4. A control method for an image capturing apparatus including:
an image sensor (30) that outputs analog pixel signals;
a synchronising-signal generating unit (69) that generates vertical synchronising signals and horizontal synchronising signals;
an analog-image processing unit (40) that receives the analog pixel signals from the image sensor (30) and processes the analog pixels signals to output digital image data;
a timing generator (50) that generates a timing signal and provides the timing signal to the image sensor (30) and to the analog-image processing unit (40) based on the vertical synchronising signal and the horizontal synchronising signal; and
a mechanical shutter (27) operable into an open state where the mechanical shutter (27) exposes the image sensor (30) to light and into a closed state where the mechanical shutter (27) covers the image sensor (30) from light, the control method **characterized by**:
inserting, in response to an instruction to capture a still image, a dummy still-image exposure frame-period and a dummy still-image read frame-period into a point in time before a still-image exposure frame-period and a still-image read frame-period;
completing parameter settings to the timing generator (50) during the dummy still-image exposure frame-period, the parameter settings causing an operation mode of the image sensor (30) to switch from an image monitoring mode to a still-image photographing mode; and
setting time at which the mechanical shutter (27) is to be closed, when the still-image exposure frame-period is started after an elapse of the dummy still-image read frame-period, wherein each frame-period is started with a vertical synchronising signal.

## Patentansprüche

1. Bildaufnahmevorrichtung, die umfasst:
einen Bildsensor (30), der analoge Pixelsignale ausgibt;
eine Einheit zur Verarbeitung analoger Bilder (40), die die analogen Pixelsignale empfängt und die analogen Pixelsignale verarbeitet, um digitale Bilddaten auszugeben;
eine Einheit zur Erzeugung von Synchronisationssignalen (69), die vertikale Synchronisationssignale und horizontale Synchronisationssignale erzeugt;
einen Zeitgenerator (50), der anhand des vertikalen Synchronisationssignals und des horizontalen Synchronisationssignals ein Zeitsignal erzeugt und das Zeitsignal an den Bildsensor (30) und an die Einheit zur Verarbeitung analoger Bilder (40) liefert;
eine mechanische Verschlusseinrichtung (27), die in einen offenen Zustand, in dem die mechanische Verschlusseinrichtung (27) den Bildsensor (30) Licht aussetzt, und in einen geschlossenen Zustand, in dem die mechanische Verschlusseinrichtung (27) den Bildsensor (30) von Licht abdeckt, betreibbar ist; und
eine Steuereinheit (61), die dann, wenn eine Anweisung, ein Standbild aufzunehmen, eingegeben wird, ein Fertigstellen der Parametereinstellungen für den Zeitgenerator (50) und eine Zeiteinstellung für den Zeitpunkt, zu dem die mechanische Verschlusseinrichtung (27) zu schließen ist, ausführt, wobei die Parametereinstellungen bewirken, dass eine Betriebsart des Bildsensors (30) von einer Bildüberwachungsbetriebsart zu einer Standbildphotographierbetriebsart wechselt, **dadurch gekennzeichnet, dass**:
als Reaktion auf die Anweisung, ein Standbild aufzunehmen, die Steuereinheit (61) eine Dummy-Standbildbelichtungsrahmendauer und eine Dummy-Standbildleserahmendauer zu einem Zeitpunkt vor einer Standbildbelichtungsrahmendauer und einer Standbildleserahmendauer einfügt, ein Fertigstellen der Parametereinstellung für den Zeitgenerator (50) während der Dummy-Standbildbelichtungsrahmendauer ausführt und dann die Zeiteinstellung für den Zeitpunkt, zu dem die mechanische Verschlusseinrichtung (27) zu schließen ist, ausführt, wenn die Standbildbelichtungsrahmendauer nach einem Ablauf der Dummy-Standbildleserahmendauer gestartet wird, wobei jede Rahmendauer mit einem vertikalen Synchronisationssignal gestartet wird.

2. Bildaufnahmevorrichtung nach Anspruch 1, wobei die Steuereinheit (61) die Dummy-Standbildbelichtungsrahmendauer beendet, wenn die Parametereinstellungen für den Zeitgenerator (50) abgeschlossen sind, indem sie bewirkt, dass die Einheit zur Erzeugung von Synchronisationssignalen (69) ein vertikales Synchronisationssignal erzeugt.

3. Bildaufnahmevorrichtung nach Anspruch 1 oder 2, wobei die Steuereinheit (61) die Belichtungseinstellungen während der Dummy-Standbildleserahmendauer fertigstellt und die Dummy-Standbildleserahmendauer beendet, wenn die Belichtungseinstellungen fertiggestellt sind, indem sie bewirkt, dass die Einheit zur Erzeugung von Synchronisationssignalen (69) ein vertikales Synchronisationssignal erzeugt.

4. Steuerverfahren für eine Bildaufnahmevorrichtung, das enthält:
einen Bildsensor (30), der analoge Pixelsignale ausgibt;
eine Einheit zur Erzeugung von Synchronisationssignalen (69), die vertikale Synchronisationssignale und horizontale Synchronisationssignale erzeugt;
eine Einheit zur Verarbeitung analoger Bilder (40), die analoge Pixelsignale von dem Bildsensor (30) empfängt und die analogen Pixelsignale verarbeitet, um digitale Bilddaten auszugeben;
einen Zeitgenerator (50), der anhand des vertikalen Synchronisationssignals und des horizontalen Synchronisationssignals ein Zeitsignal erzeugt und das Zeitsignal an den Bildsensor (30) und an die Einheit zu Verarbeitung analoger Bilder (40) liefert; und
eine mechanische Verschlusseinrichtung (27), die in einen offenen Zustand, in dem die mechanische Verschlusseinrichtung (27) den Bildsensor (30) Licht aussetzt, und in einen geschlossenen Zustand, in dem die mechanische Verschlusseinrichtung (27) den Bildsensor (30) vor Licht abschirmt, betreibbar ist, wobei das Steuerverfahren **gekennzeichnet ist durch**:
Einfügen als Reaktion auf eine Anweisung, ein Standbild aufzunehmen, einer Dummy-Standbildbelichtungsrahmendauer und einer Dummy-Standbildleserahmendauer zu einem Zeitpunkt vor einer Standbildbelichtungsrahmendauer und einer Standbildleserahmendauer;
Fertigstellen der Parametereinstellungen für den Zeitgenerator (50) während der Dummy-Standbildbelichtungsrahmendauer, wobei die Parametereinstellungen bewirken, dass eine Betriebsart des Bildsensors (30) von einer Bildüberwachungsbetriebsart zu einer Standbildphotographierbetriebsart wechselt; und
Einstellen eines Zeitpunkts, zu dem die mechanische Verschlusseinrichtung (27) zu schließen ist, wenn die Standbildbelichtungsrahmendauer nach einem Ablauf der Dummy-Standbildleserahmendauer gestartet wird, wobei jede Rahmendauer mit einem vertikalen Synchronisationssignal gestartet wird.

## Revendications

1. Appareil de capture d'image comprenant :
un capteur d'image (30) qui délivre des signaux de pixel analogiques ;
une unité de traitement d'image analogique (40) qui reçoit les signaux de pixel analogiques et qui traite les signaux de pixel analogiques pour délivrer des données d'image numériques ;
une unité de génération de signal de synchronisation (69) qui génère des signaux de synchronisation verticale et des signaux de synchronisation horizontale ;
un générateur de synchronisation (50) qui génère un signal de synchronisation et fournit le signal de synchronisation au capteur d'image (30) et à l'unité de traitement d'image analogique (40) sur la base du signal de synchronisation verticale et du signal de synchronisation horizontale ;
un obturateur mécanique (27) qui peut être utilisé dans un état ouvert dans lequel l'obturateur mécanique (27) expose le capteur d'image (30) à la lumière et dans un état fermé dans lequel l'obturateur mécanique (27) recouvre le capteur d'image (30) et bloque la lumière ; et
une unité de commande (61) qui, lorsqu'une instruction pour capturer une image fixe est entrée, effectue l'achèvement des réglages de paramètres pour le générateur de synchronisation (50) et des réglages de temps pour l'instant auquel l'obturateur mécanique (27) doit être fermé, les réglages de paramètres faisant en sorte qu'un mode de fonctionnement du capteur d'image (30) commute d'un mode de surveillance d'image vers un mode de photographie d'image fixe, **caractérisé en ce que**
en réponse à l'instruction de capture d'une image fixe, l'unité de commande (61) insère une période de trame d'exposition d'image fixe fictive et une période de trame de lecture d'image fixe fictive à un instant avant une période de trame d'exposition d'image fixe et une période de trame de lecture d'image fixe, effectue l'achèvement des réglages de paramètres pour le générateur de synchronisation (50) pendant la période de trame d'exposition d'image fixe fictive, et effectue ensuite le réglage de temps pour l'instant auquel l'obturateur mécanique (27) doit être fermé lorsque la période de trame d'exposition d'image fixe est débutée après l'écoulement de la période de trame de lecture d'image fixe fictive, dans lequel chaque période de trame est débutée avec un signal de synchronisation verticale.

2. Appareil de capture d'image selon la revendication 1, dans lequel l'unité de commande (61) met fin à la période de trame d'exposition d'image fixe fictive lorsque les réglages de paramètres pour le générateur de synchronisation (50) sont achevés en faisant en sorte que l'unité de génération de signal de synchronisation (69) génère un signal de synchronisation verticale.

3. Appareil de capture d'image selon la revendication 1 ou 2, dans lequel l'unité de commande (61) achève les réglages d'exposition pendant la période de trame de lecture d'image fixe fictive et met fin à la période de trame de lecture d'image fixe fictive lorsque les réglages d'exposition sont achevés en faisant en sorte que l'unité de génération de signal de synchronisation (69) génère un signal de synchronisation verticale.

4. Procédé de commande pour un appareil de capture d'image comprenant :
un capteur d'image (30) qui délivre des signaux de pixel analogiques ;
une unité de génération de signal de synchronisation (69) qui génère des signaux de synchronisation verticale et des signaux de synchronisation horizontale ;
une unité de traitement d'image analogique (40) qui reçoit les signaux de pixel analogiques du capteur d'image (30) et qui traite les signaux de pixels analogiques pour délivrer des données d'image numériques ;
un générateur de synchronisation (50) qui génère un signal de synchronisation et fournit le signal de synchronisation au capteur d'image (30) et à l'unité de traitement d'image analogique (40) sur la base du signal de synchronisation verticale et du signal de synchronisation horizontale ; et
un obturateur mécanique (27) pouvant être utilisé dans un état ouvert dans lequel l'obturateur mécanique (27) expose le capteur d'image (30) à la lumière et dans un état fermé dans lequel l'obturateur mécanique (27) recouvre le capteur d'image (30) et bloque la lumière, le procédé de commande étant **caractérisé par** :
l'insertion, en réponse à une instruction de capture d'une image fixe, d'une période de trame d'exposition d'image fixe fictive et d'une période de trame de lecture d'image fixe fictive à un instant avant une période de trame d'exposition d'image fixe et une période de trame de lecture d'image fixe ;
l'achèvement des réglages de paramètres pour le générateur de synchronisation (50) pendant la période de trame d'exposition d'image fixe fictive, les réglages de paramètres faisant en sorte qu'un mode de fonctionnement du capteur d'image (30) commute d'un mode de surveillance d'image vers un mode de photographie d'image fixe ; et
le réglage de l'instant auquel l'obturateur mécanique (27) doit être fermé, lorsque la période de trame d'exposition d'image fixe est débutée après l'écoulement de la période de trame de lecture d'image fixe fictive, dans lequel chaque période de trame est débutée avec un signal de synchronisation verticale.
